# EUROPEAN PATENT APPLICATION

(11) **EP 4 832 205 A1**
(43) Date of publication of application: **28.10.2026**
(21) Application number: 24907073.1
(22) Date of filing: 22.11.2024
(51) Int. Cl.: H01M 50/267, H01M 50/213, H01M 50/233, H01M 50/251, H01M 50/271, H01M 50/284, H01M 50/291

(54) **POWER SUPPLY DEVICE, POWER SUPPLY CASE FOR POWER SUPPLY DEVICE, AND METHOD FOR MANUFACTURING POWER SUPPLY DEVICE**

(30) Priority: 22.12.2023 JP 2023217214
(71) Applicant: Panasonic Intellectual Property Management Co., Ltd., Kadoma-shi, Osaka 571-0057 (JP)
(72) Inventor: MIURA, Takumu, Kadoma-shi, Osaka 571-0057 (JP)
(74) Representative: Novagraaf International SA
(86) International application number: PCT/JP2024/041497
(87) International publication number: WO 2025/134685

(57) **Abstract**

A power supply device includes battery modules and a power-supply case accommodating the battery modules therein. Each battery module includes secondary battery cells. The power-supply case includes a case body having first and second surfaces opposite to each other and a plate portion fixed to a part of the case body. The first surface includes housing ports opening therein. Each battery module is accommodated removably in a corresponding housing port through the corresponding housing port. The plate portion is made of a member separable from the case body. The plate portion includes a stopper restricting an insertion distance by which each battery module is inserted into the corresponding housing port by interfering with an end surface of each battery module while the end surface of each battery module is inserted into the corresponding housing port toward the second surface of the case body.

## Description

### TECHNICAL FIELD

The present disclosure relates to a power supply device, a power-supply case for the power supply device, and a method of manufacturing the power supply device.

### BACKGROUND ART

Battery modules each including rechargeable secondary battery cells, such as lithium-ion secondary batteries connected in series or in parallel or in series and parallel to one another are used as power supply devices for driving target equipment in various fields. For example, a backup power supply device including battery modules inserted in a rack. Each battery module includes secondary battery cells connected in series or in parallel or in series and parallel to one another.

The backup power supply device for a data center includes battery modules, electrical components, and a power-supply case. Each battery module has a removably insertable structure. The power supply device is provided inside thereof with a stopper so that the battery module does not interfere with the electrical components when the battery module is inserted or removed.

The stopper is used for positioning the battery module when the battery module is inserted into the rack. Specifically, when a battery module is pushed into the rack to reach a predetermined position, the stopper contacts an end surface of the battery module so that the battery module cannot be pushed further in. This configuration allows the battery module to be held in place. In this state, a battery-side connector provided on the end surface of the battery module mates with a case-side connector mounted on a circuit board disposed at the back of the power-supply case, so that the battery module is electrically connected to the circuit board of the power-supply case.

### CITATION LIST

### Patent Literature

PTL 1: U.S. Patent Application Publication No. 2019/0273366
PTL 2: U.S. Patent Application Publication No. 2018/0063988

### SUMMARY OF INVENTION

The battery modules constituting the power supply device are required to have a high capacity and a high output power. However, in the case that the battery module is long to accommodate a lot of secondary battery cells therein, the battery case is redesigned so as to change the position of the stopper. Particularly, the position of the stopper which defines the position of the insertion margin for the battery module changes depending on the length of the battery module in a longitudinal direction. This may cause a problem that the design of the power-supply case cannot be common for battery modules that are different in the lengths in the longitudinal direction from one another.

An issue of the present disclosure is to provide a power supply device that can cope with the changes in the length of the battery module in the longitudinal direction. Another issue of the present disclosure is to provide a power supply device that can use the power-supply case in common for the battery modules which have different lengths from one another. These issues and problems to be solved in the present disclosure does not exclude the presence of other objects and problems to be solved. Also, an aspect of the present disclosure may not necessarily be required to solve all of these problems. Also, it may be possible to extract other problems to be solved from the description in the specification, drawings and claims of the present disclosure.

A power supply device in one aspect of the present disclosure includes: a plurality of battery modules, each of the plurality of battery modules including a plurality of secondary battery cells; and a power-supply case accommodating the plurality of battery modules therein. The power-supply case includes: a case body having a first surface and a second surface opposite to the first surface, the first surface including a plurality of housing ports opening therein, each of the plurality of battery modules being accommodated removably in a corresponding one of the plurality of housing ports through the corresponding one of the plurality of housing ports; and a plate portion fixed to a part of the case body, the plate portion being made of a member separable from the case body. The plate portion includes a stopper restricting an insertion distance by which the each of the plurality of battery modules is inserted into the corresponding one of the plurality of housing ports by interfering with an end surface of the each of the plurality of battery modules while the end surface of the each of the plurality of battery modules is inserted into the corresponding one of the plurality of housing ports toward the second surface of the case body.

A power-supply case in another aspect of the present disclosure is a power-supply case for a power supply device, the power-supply case being configured to accommodate a plurality of battery modules therein, each of the plurality of battery modules including a plurality of secondary battery cells. The power-supply case includes: a case body having a first surface and a second surface opposite to the first surface, the first surface including a plurality of housing ports opening therein, each of the plurality of battery modules being configured to be accommodated removably in a corresponding one of the plurality of housing ports through the corresponding one of the plurality of housing ports; and a plate portion fixed to a part of the case body, the plate portion being made of a member separable from the case body. The plate portion includes a stopper configured to restrict an insertion distance by which the each of the plurality of battery modules is inserted into the corresponding one of the plurality of housing ports by interfering with an end surface of the each of the plurality of battery modules while the end surface of the each of the plurality of battery modules is inserted into the corresponding one of the plurality of housing ports toward the second surface of the case body.

A method of manufacturing a power supply device in still another aspect of the present disclosure is a method of manufacturing a power supply device which includes: a plurality of battery modules, each of the plurality of battery modules including a plurality of secondary battery cells; and a power-supply case accommodating the plurality of battery modules therein. The power-supply case includes: a case body having a first surface and a second surface opposite to the first surface, the first surface including a plurality of housing ports opening therein, each of the plurality of battery modules being accommodated removably in a corresponding one of the plurality of housing ports through the corresponding one of the plurality of housing ports; and a plate portion fixed to a part of the case body, the plate portion being made of a member separable from the case body. In the method, the plate portion is provided. The plate portion includes a stopper restricting an insertion distance by which the each of the plurality of battery modules is inserted into the corresponding one of the plurality of housing ports by interfering with an end surface of the each of the plurality of battery modules while the end surface of the each of the plurality of battery modules is inserted into the corresponding one of the plurality of housing ports toward the second surface of the case body. The plate portion is fixed to a part of the case body.

According to the power supply device, the power-supply case for the power supply device, and the method of manufacturing the power supply device in the above-described aspects of the present disclosure, the plate portion provided with the stopper is configured as a member separable from the case body. In this configuration, even when the length of the battery module is changed, the plate portion may be changed to another plate portion including a stopper at a position changed depending on the change of the length of the battery module. Accordingly, necessity of redesigning the case body can be avoided.

### BRIEF DESCRIPTION OF DRAWINGS

FIG. 1 is an exploded perspective view of a power supply device according to Exemplary Embodiment 1 for showing a state in which one battery module is inserted into or removed from the power supply device.
FIG. 2 is an exploded perspective view of the power supply device shown in FIG. 1 as viewed from the rear.
FIG. 3 is an exploded perspective view of a power-supply case of the power supply device shown in FIG. 1.
FIG. 4 is an exploded perspective view of the power-supply case shown in FIG. 3 as viewed from the rear.
FIG. 5 is an exploded perspective view of the power-supply case shown in FIG. 4 in a state in which a circuit board and an insulating sheet are detached from the power-supply case.
FIG. 6 is an enlarged perspective view of the power-supply case shown in FIG. 5.
FIG. 7 is an exploded perspective view of the power-supply case shown in FIG. 5 in a state in which a plate portion is detached from the power-supply case.
FIG. 8 is a vertical cross-sectional view of the power supply device along a line VIII-VIII shown in FIG. 1.
FIG. 9 is an exploded perspective view of the battery module shown in FIG. 1.
FIG. 10 is a schematic cross-sectional view of the power supply device according to Embodiment 1.
FIG. 11 is a schematic cross-sectional view of the power supply device for illustrating a state in which a battery module having a different length is inserted into the case body shown in FIG. 10.
FIG. 12 is an exploded perspective view of a power supply device according to a comparative example as viewed from the rear.
FIG. 13 is an enlarged perspective view of a stopper of the power supply device according to the comparative example.
FIG. 14 is a schematic cross-sectional view of the power supply device according to the comparative example for illustrating a state in which a battery module is inserted into the power-supply case of the power supply device.
FIG. 15 is a schematic cross-sectional view of the power supply device shown in FIG. 14 for illustrating a state in which the battery module is made longer in the power supply device.
FIG. 16 is a schematic cross-sectional view of a power supply device according to a modified example.
FIG. 17 is a perspective view of a plate portion.
FIG. 18 is a perspective view of a plate portion of a power supply device according to Exemplary Embodiment 2.
FIG. 19 is a perspective view of a plate portion of a power supply device according to Exemplary Embodiment 3.

### DESCRIPTION OF EMBODIMENT

Aspects of the present disclosure may also be defined by the following configurations and features.

In a power supply device in another aspect of the present disclosure according to the above aspects, the case body may include a plurality of storage spaces therein communicating with the plurality of housing ports, respectively, the each of the plurality of battery modules being accommodated in a corresponding one of the plurality of storage spaces.

In a power supply device in another aspect of the present disclosure according to any of the above aspects, an end surface of the plate portion may not protrude from a bottom surface of each of the plurality of storage spaces. This configuration avoids occurrence of a case that, when the battery module is inserted into the power-supply case, the end surface of the plate portion interferes with the battery module to obstruct the battery module from being inserted further.

In a power supply device in another aspect of the present disclosure according to any of the above aspects, a placing surface inside the case body on which the plurality of battery modules are placed may be flush with an upper surface of the plate portion. In this configuration, although the plate portion is added to the case body, the placing surface does not change in the height direction, so that the interference of the plate portion with the battery module can be avoided during insertion of the battery module.

In a power supply device in still another aspect of the present disclosure according to any of the above aspects, the case body may have a bottom opening provided in a bottom surface of the case body. The plate portion may be disposed to close the bottom opening of the case body.

A power supply device in still another aspect of the present disclosure according to any of the above aspects may further includes a circuit board disposed inside the case body between the second surface of the case body and the end surface of the each of the plurality of battery modules. The plate portion may further include a plate-side board fixing portion fixing a part of the circuit board. In this configuration, when a width of the circuit board is changed depending on the change in the length of the battery module inserted into the power-supply case, the position of the plate-side circuit board fixing portion provided on the plate portion may be adjusted depending on the changed width of the circuit board. Accordingly, a circuit board having a different depth can be used without redesigning the case body.

In a power supply device in still another aspect of the present disclosure according to any of the above aspects, the case body may include a case-side board fixing portion fixing another part of the circuit board. In this configuration, while the position of the case-side circuit board fixing portion provided on the case body is fixed, the position of the plate-side circuit board fixing portion provided on the plate portion can be variable by replacing the plate portion with a compatible one, so that it is possible to fix any of circuit boards having different widths from one another.

In a power supply device in still another aspect of the present disclosure according to any of the above aspects, the circuit board may be placed in the case body along an insertion direction of the plurality of battery modules. In this configuration, the circuit board can be kept in a horizontal position between the battery module and the second surface of the case body.

In a power supply device in still another aspect of the present disclosure according to any of the above aspects, the plurality of housing ports may be aligned in a horizontal direction in the first surface. Ion this configuration, it is possible to insert and remove the plurality of battery modules in positions aligned side by side.

In a power supply device in still another aspect of the present disclosure according to any of the above aspects, the stopper may have a cross section with a semi-circular shape.

In a power supply device in still another aspect of the present disclosure according to any of the above aspects, the power supply device is a back-up power supply for a data center. With respect to the backup power supply device for a data center, the diameter of the battery module is specified in the standard. Accordingly, it is necessary for increasing the capacity by increasing the size of the battery module to extend the size in only the depth direction. As a problem in this situation, it was necessary for changing the length of the battery module in the depth direction to redesign the power-supply case itself including the stopper. With the above-described configuration in this aspect of the present disclosure, on the other hand, it is possible to solve the above problem by providing the stopper on the plate portion prepared as a member separable from the case body so that the case body can be used in common.

In a method of manufacturing a power supply device in still another aspect of the present disclosure, according to any of the above aspects, in preparing the plate portion, a plate length D1 which is a length of the plate portion in a depth direction is determined to satisfy a condition, D1 > Lmax - Lmin, where Lmax is a maximum value of module lengths of the plurality of battery modules, and Lmin is a minimum value of the module lengths of the plurality of battery modules. In this method, it is possible to change the position of providing the stopper within the range of the plate length of the plate portion, so that it is possible to use battery modules having module lengths included in an entire range of expected module lengths.

Exemplary embodiments of the present disclosure will be described below with reference to the accompanying drawings. However, it should be noted that the exemplary embodiments described hereinafter are merely examples for implementing technical ideas of the present disclosure, and that the present disclosure should not be limited to the following exemplary embodiments. It should also be noted that the present specification is not intended to limit the elements defined in the claims to the members described in the exemplary embodiments. Particularly, the dimensions, materials, shapes, and relative arrangements, for example, of the structural components described in the exemplary embodiments are not intended to limit the scope of the present disclosure to only those described unless otherwise noted, and are merely examples for explanation. The sizes and positional relations, for example, of the members shown in each figure may sometimes be exaggerated to clarify the explanation. Further, like names and like reference marks in the following description indicate like or similar members, and detailed description of those will appropriately be omitted. Further, each of the elements constituting the present disclosure may be implemented in the form in which plural elements are configured by a single member so that the functions of the plural elements are achieved by the single member, or on the contrary, in the form in which functions of a single member are shared by plural members.

A power supply device of the present disclosure may be used as a stationary power supply device such, for example, as a backup power supply for a data center, a home-use, office-use or factory-use power storage device for storing power obtained by a solar power generation, or a power supply for daytime peak shaving. The power supply device described hereinafter as an exemplary embodiment of the present disclosure, is a power supply device used as a backup power supply for a data center. The power supply device for a data center is used in a condition inserted into a storage space like, for example, a rack in the same way as the other hardware such, for example, as a server, data storages and network switches. The power supply device installed in such rack is also called a power shelf.

### Exemplary Embodiment 1

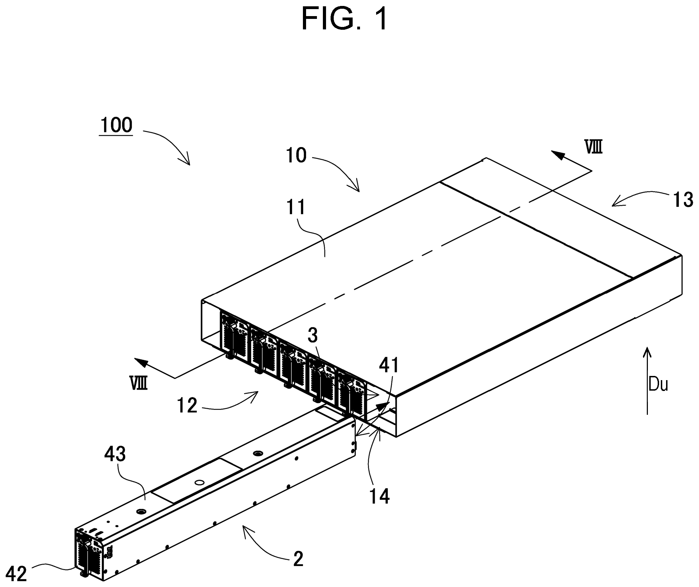

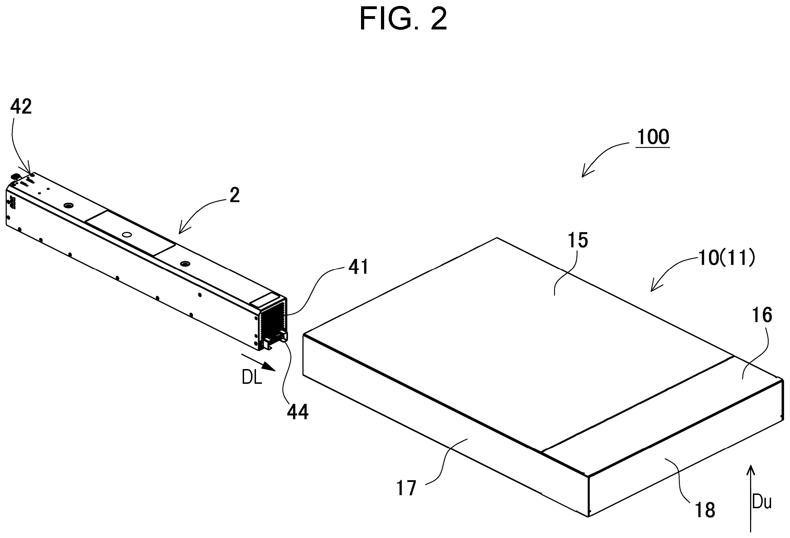

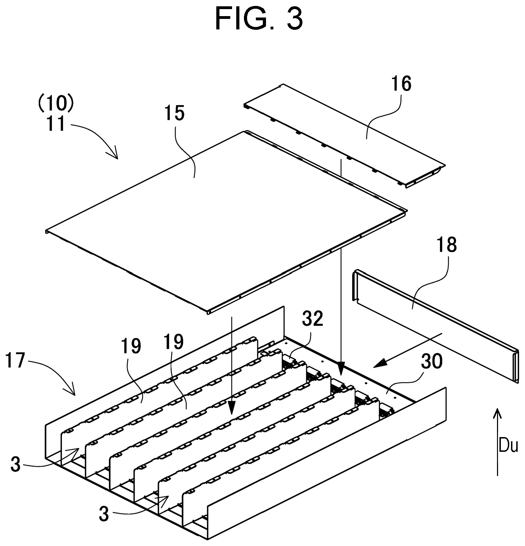

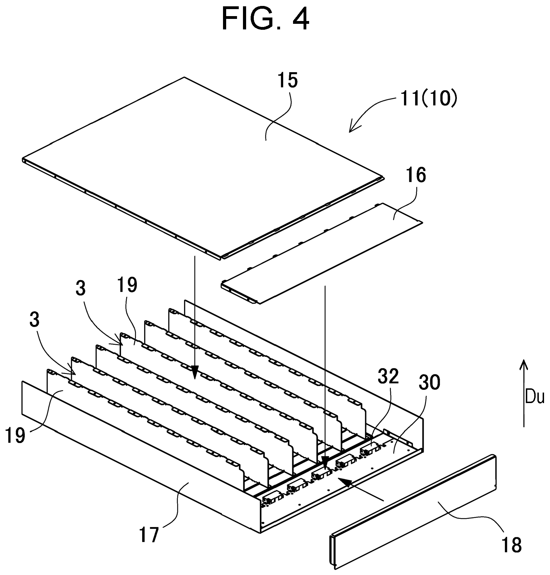

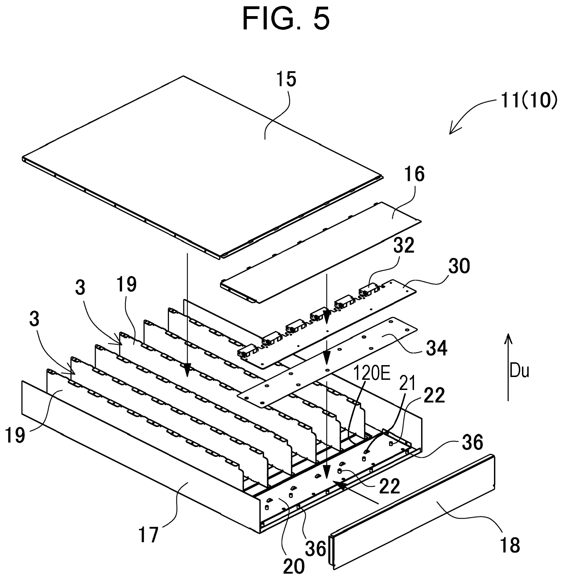

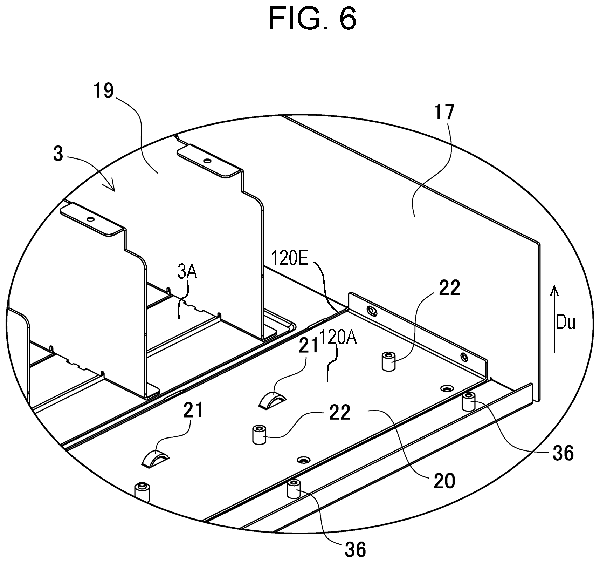

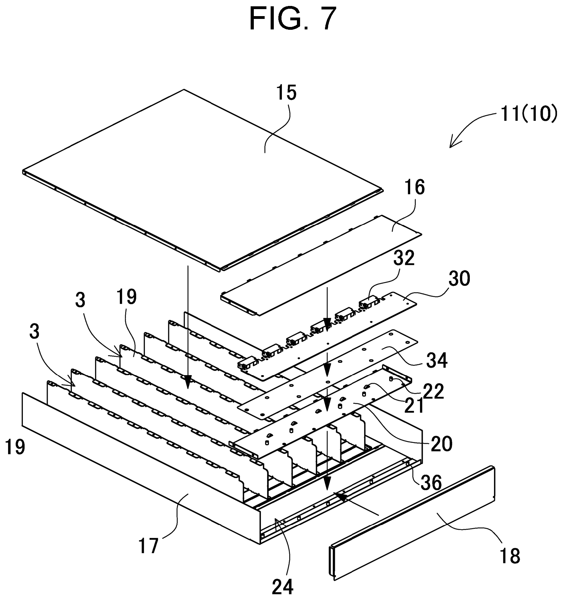

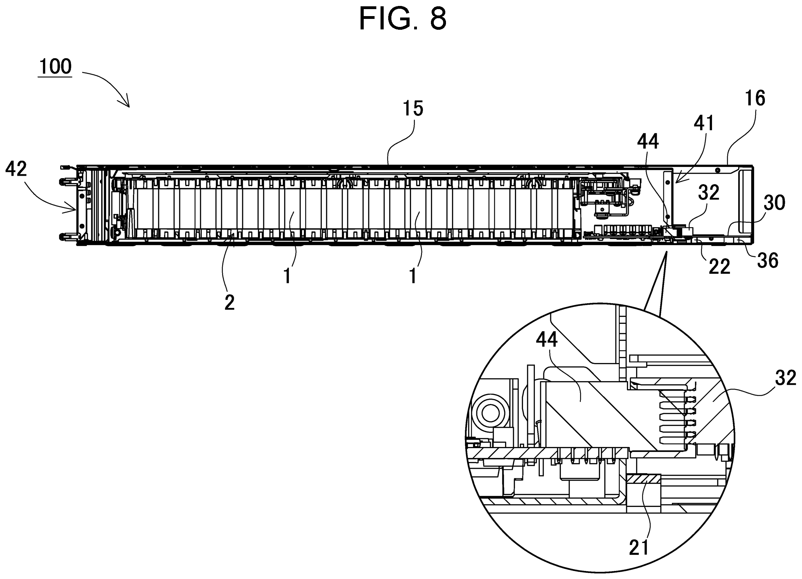

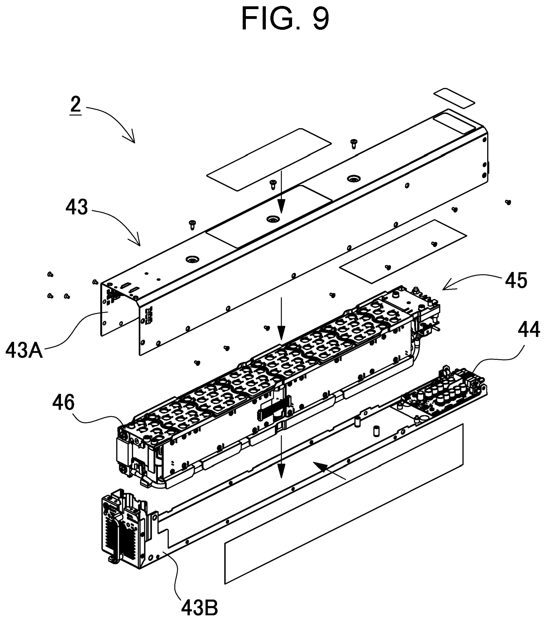

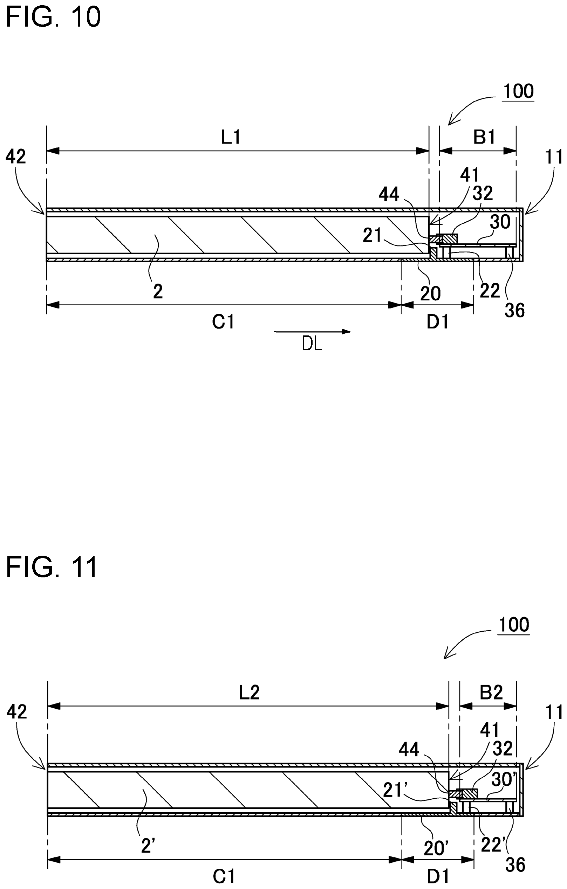

A power supply device according to Exemplary Embodiment 1 is illustrated in FIGS. 1 to 11. FIG. 1 is an exploded perspective view of a power supply device 100 according to Embodiment 1 for showing a state in which one battery module 2 is inserted into or removed from the power supply device 100. FIG. 2 is an exploded perspective view of the power supply device 100 shown in FIG. 1 as viewed from the rear. FIG. 3 is an exploded perspective view of a power-supply case 10 of the power supply device 100 shown in FIG. 1. FIG. 4 is an exploded perspective view of the power-supply case 10 shown in FIG. 3 as viewed from the rear. FIG. 5 is an exploded perspective view of the power-supply case 10 shown in FIG. 4 in a state in which a circuit board 30 and an insulating sheet 34 are detached from the power-supply case 10. FIG. 6 is an enlarged perspective view of the power-supply case 10 shown in FIG. 5. FIG. 7 is an exploded perspective view of the power-supply case 10 shown in FIG. 5 in a state in which a plate portion 20 is detached from the power-supply case 10. FIG. 8 is a vertical cross-sectional view of the power supply device 100 along a line VIII-VIII shown in FIG. 1. FIG. 9 is an exploded perspective view of the battery module 2 shown in FIG. 1. FIG. 10 is a schematic cross-sectional view of the power supply device 100 according to Embodiment 1. FIG. 11 is a schematic cross-sectional view of the power supply device for illustrating a state in which a battery module 2' having a different length is inserted into the case body 11 shown in FIG. 10. The power supply device 100 illustrated in these figures includes a power-supply case 10 and a battery module 2. A circuit board 30 is disposed on the back side of the power-supply case 10.

### Power-Supply Case 10

The power-supply case 10 is configured to accommodate one or more battery modules 2 therein such that each battery module 2 is freely insertable into or removable from the power-supply case 10, and constitutes an outer shape of the power supply device 100. The power-supply case 10 includes a case body 11 having a box shape and has a first surface 12 and a second surface 13 opposed to the first surface 12. In the example shown in, e.g., FIGS. 1 and 2, the front surface of the case body 11 is the first surface 12, and the back surface of the case body 11 is the second surface 13. Housing ports 14 open in the first surface 12 such that each of the battery modules 2 is inserted or removed through a corresponding one of the housing ports 14. In the example shown in, e.g., FIGS. 1 and 2, the case body 11 of the power-supply case 10 has a flat plate shape, and the housing ports 14 are aligned horizontally in the first surface 12 at the front side, so that battery modules 2 are arranged side by side.

As shown in the exploded perspective views of FIGS. 3 to 7, the case body 11 is divided to a first body case 15, a second body case 16, a third body case 17 and a fourth body case 18. The third body case 17 is bent to have a U-shape opening upward to have an upper opening. The first body case 15 and the second body case 16 constitute a lid such that the first body case 15 and the second body case 16 close the upper opening of the third body case. The second surface 13 which is the back surface of the case body 11 is closed by the fourth body case 18. Inside the case body 11, partition plates 19 are arranged in parallel to one another at predetermined intervals and fixed to define storage spaces 3. Each storage space 3 communicates with a corresponding one of the housing ports 14 to accommodate one battery module 2 therein. In the examples shown in FIGS. 3 to 7, for convenience of illustration, partition plates 19 are fixed to the bottom surface of the third body case 17. However, the partition plates 19 may be fixed to the first body case 15 instead of the third body case 17 or in addition to the third body case 17. The second body case 16 is configured separately from the first body case 15 so that the circuit board 30 and the plate portion 20 can be easily accessed while the partition plates 19 are fixed to at least one of the first body case 15 and the third body case 17.

### Circuit Board 30

A circuit board 30 is disposed at the back side of the case body 11 between the second surface 13 of the case body 11 and each of the battery modules 2. The circuit board 30 is placed inside the case body 11 along a direction in which the battery modules 2 are inserted. That is, the circuit board 30 is held in a horizontal position between the battery modules 2 and the second surface 13 of the case body 11.

Electronic circuits mounted on the circuit board 30 include, for example, a current detection circuit for detecting a charging current and a discharging current, a circuit for detecting and calculating a full charged state and a residual capacity of the secondary battery cells from battery information including, for example, a voltage and a temperature of the secondary battery cells inputted from a battery-mount circuit board of each battery block including secondary battery cells connected to one another, a control circuit for controlling the charging and discharging of the secondary battery cells, and a protection circuit for monitoring whether or not the batteries are normal. The circuit board 30 has a rectangular shape. In the example shown, for example, in FIG. 4, the circuit board 30 is fixed in a horizontal position at the back side of the power-supply case 10. The circuit board 30 may be made of, e.g., resin, such as glass epoxy resin.

The circuit board 30 may be placed inside the case body 11 with an insulating sheet 34 intervening between the circuit board 30 and the case body 11. This configuration enhances an insulation on the back surface of the circuit board 30.

The battery case may not be limited to the above-described configuration. The housing ports may be stacked in the vertical direction so that battery module enclosures are aligned vertically. The battery module enclosures may be arranged in a grid pattern. It is not necessary to insert the battery module enclosures into all of the housing ports 14, and the number of the battery module enclosures inserted into the power-supply case may be determined depending on the output power or capacity required for the power supply device. The shape of the opening end and the length of each housing port may be designed depending on the size of the battery module to be inserted. The case body 11 is preferably made of a metal like a metal plate, which has a high heat dissipation property.

### Battery Module 2

The battery module 2 is inserted into and removed from the case body 11 through the housing port 14 of the case body 11. The outer shape of the battery module 2 may be a rod shape elongated in one direction so as to be easily inserted and removed. The battery module 2 with the rod shape may preferably have a box shape. One end surface of the battery module 2 with the box shape in the longitudinal direction DL of the battery module 2 will be referred to as an insertion surface 41 from which the battery module enclosure is inserted into the case body 11. Another end surface of the battery module 2 will be referred to as an exposure surface 42 exposed from the case body 11 while the battery module 2 are fully inserted into the case body 11. In the example shown in, e.g., FIG. 1, the battery module 2 has rectangular columnar shape with the end surfaces having square shapes. However, the shape of the battery module may not be limited to this shape, and may have a shape with the end surfaces with, e.g., rectangular or octagonal shapes.

Each battery module 2 includes, as shown in FIG. 9, a module enclosure 43 with a box shape, and secondary battery cells 1 accommodated in the module enclosure 43. Each battery module 2 outputs power generated by secondary battery cells 1 accommodated inside the power-supply case 10 and connected in series or in parallel or in parallel and series to one another. For this purpose, the battery module 2 includes a battery-side connector 44 configured to be connected to the power-supply case 10. On the other hand, the case body 11 includes a case-side connector 32 configured to be connected to the battery-side connector 44.

The battery-side connector 44 is provided on the insertion surface 41 of the battery module 2. On the other hand, the case-side connector 32 is provided on the circuit board 30 so as to face the insertion surface of the battery module 2. The battery-side connector 44 and the case-side connector 32 are arranged so that the battery-side connector 44 fits to the case-side connector 32 at the position at which the insertion surface 41 of the battery module 2 inserted into the case body 11 contacts a later-described stopper 21 and stops.

The module enclosure 43 of the battery module 2 has a box shape elongated in the front-back direction as shown in the exploded perspective view in FIG. 9, and has an assembly-housing space therein configured to accommodate an internal assembly 45 therein. The module enclosure 43 includes a first module case 43A having a cross section with a U-shape with a bottom opening, and a second module case 43B closing the bottom opening of the first module case 43A. Each of the first module case 43A and the second module case 43B are made by, e.g., bending a metal plate to have a predetermined shape. Materials that can be used as the metal plate include, for example, a hot-dip galvanized steel sheet, an aluminum sheet, and an aluminum alloy sheet.

The internal assembly 45 is accommodated in the assembly-housing space inside the module enclosure 43. The internal assembly 45 includes a battery block each including secondary battery cells 1, and an output unit including an output terminal. The battery block includes, for example, a battery holder and cylindrical secondary battery cells 1 which are placed upright and arranged in parallel to one another in the battery holder. The battery holder may preferably be made of material with a high insulating property and heat-resistance. Accordingly, the battery holder may be made of resin, such as polycarbonate or ABS resin. The secondary battery cells 1 may be connected in parallel and series to one another. The secondary battery cell 1 may be a lithium-ion secondary battery. The battery module 2 including the lithium-ion secondary batteries as the secondary battery cells 1 increases the output power relative to the volume and weight. However, the secondary battery cell may also be the lithium polymer battery or the nickel-metal hydride battery in place of the lithium-ion battery. In the present disclosure, the secondary battery cell may thus not be limited to the lithium-ion battery, but may be any of rechargeable batteries.

The battery block further includes a module board disposed vertically on the side surface of the battery holder. On the module board, a lead plate 46 connected to the end surface electrode of the secondary battery cell 1 is connected to the module enclosure 43 to detect an intermediate potential of the secondary battery cells 1 which are connected in series to one another. The module enclosure 43 further includes an electronic circuit for detecting the states of the secondary battery cells 1. The electronic circuit includes a voltage detection circuit for detecting the total voltage and an intermediate potential of the battery assembly of the secondary battery cells 1 connected in series or in parallel or in series and parallel to one another, and a circuit for detecting the temperatures of the secondary battery cells 1.

### Plate Portion 20

The power-supply case 10 includes a plate portion 20 made of a member separable from the case body 11 and is fixed to a part of the case body 11 as shown in FIGS. 5 to 7 and 10. The plate portion 20 includes a stopper 21 configured to interfere with or contact the end surface (the insertion surface 41) of each of the battery modules 2 to restrict a distance by which the battery modules 2 are inserted when each of the battery modules 2 is inserted from the end surface (the insertion surface 41) thereof through a corresponding housing port 14 of the case body 11 toward the second surface 13 of the case body 11. The plate portion 20 including the stopper 21 and made of a member separable from the case body 11 cope with the change in the module length of the inserted battery module 2' from L1 shown in FIG. 10 to L2 shown in FIG. 11 by preparing a plate portion 20' on which the position of the stopper 21' is changed depending on the change in the module length. Accordingly, the situation of redesigning the case body 11 can be avoided.

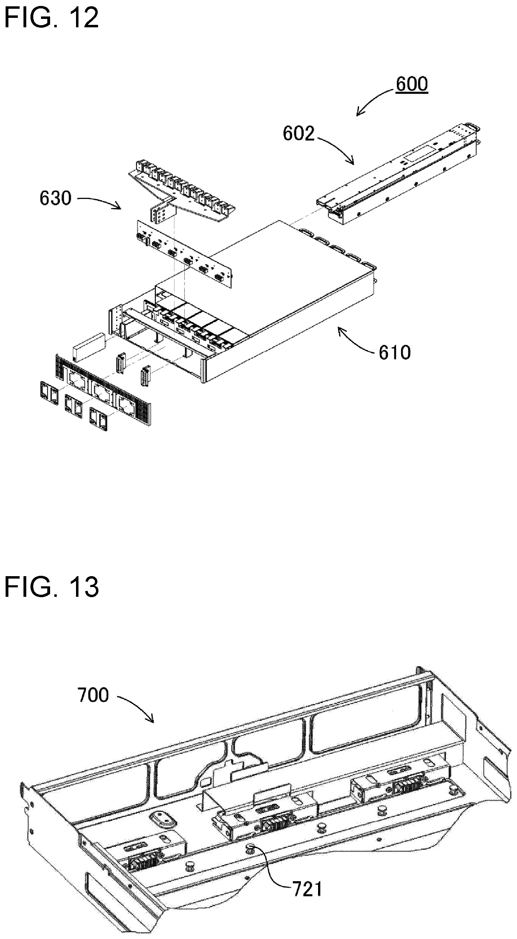

FIG. 12 is an exploded perspective view of a power supply device 600 according to a comparative example for a data center. As shown in FIG. 12, the power supply device 600 for a data center includes a power-supply case 610, battery modules 602 inserted removably into the power-supply case 610, and electrical components 630. Each battery module 602 is attachable and detachable, and can be replaced with another. The power supply device 600 includes a stopper in the power-supply case 610 so that the battery module 602 does not interfere with the electrical components during insertion or removal of the battery module 602. The stopper positions the insertion margin of the battery module 2, and may be called, for example, a ring clasp. In the power supply device 700 shown in FIG. 13, a member like a pin is used as a stopper 721.

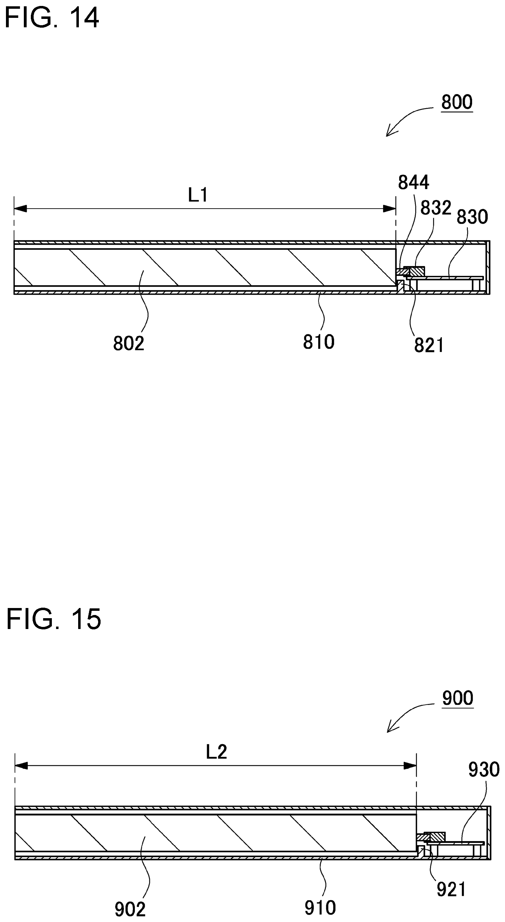

FIG. 14 is a schematic cross-sectional view of a stopper 821 like the above is used to position the battery module 802 when the battery module 802 is inserted into the power-supply case 810. Specifically, in the state in which the battery module 802 is pushed in to reach a predetermined position, the stopper 821 contacts the end surface of the battery module 802 so that the battery module 802 cannot be pushed further in. This configuration allows the battery module 802 to be held in place. Also, in this state, the battery-side connector 844 provided on the end surface of the battery module 802 is fitted to the case-side connector 832 mounted on the circuit board 830 disposed at the back side of the power-supply case 810, so that the battery module 802 is electrically connected to the circuit board 830.

A power supply device for a data center is used in the state placed in a storage space, such as a rack. On the other hand, for the facilities used for the data center, it is often required that a hardware, such as the server, including the power supply device, the storage and the network switches are compliant with the standards. For example, the back-up battery modules are installed such that six battery modules are stored in a power supply device disposed at the center of the rack. In a typical standard among plural standards, the height of the device installed in the rack is specified by a unit called an open unit (OU). The height of 1 OU is 1.89 inches (48 mm), and the width is 21 inches (533.4 mm).

In recent years, with the increase in demand for the generative AI, the battery modules 2 for constituting the power supply device has a high capacity and output power. However, the size of the battery module cannot be increased in the width direction due to the restrictions by the standard. Therefore, it is necessary to increase the size of the battery module. In this situation, to increase the size of the battery module without changing the size of the rack for installing the power supply device, it is necessary to increase the size of the battery module in the depth direction of the power supply device, or in the longitudinal direction of the battery module in which the battery module is inserted. Accordingly, it was necessary to decrease the size of the electrical component unit at the back side of the storage space of the rack.

In the power supply device 800 shown in FIG. 14, to increase the capacity of the battery module 802, such an example is considered that, like a power supply device 900 shown in FIG. 15, a battery module 902 having a full length L2 longer than the full length L1 of the battery module shown in FIG. 14 is set in the power-supply case 910. Depending on the increase in the longitudinal size of the battery module, the length of the circuit board 930 constituting the electrical component unit decreases from B1 to B2 accordingly. In this case, since the length of the battery module 902 is longer than the battery module 802 shown in FIG. 14, the position of the stopper 921 for positioning the battery module 902 in place in the power-supply case 910 is shifted leftward from the position of the stopper 821 shown in FIG. 14. As the result, although the power-supply case 910 shown in FIG. 15 and the power-supply case 810 shown in FIG. 14 are the same in the outer shape, the two power-supply cases are different from each other in the position of the stopper inside the power-supply case. Accordingly, it was necessary to redesign the entire power-supply case. As described above, since the position of the stopper positioning the insertion margin of the battery module changes depending on the longitudinal direction of the battery module, the power-supply case cannot be designed to be usable commonly to the battery modules having different longitudinal directions from one another.

On the other hand, the power supply device 100 according to the embodiment includes, as shown in the exploded perspective view of FIG. 7, the plate portion 20 is made of a member separable from the case body 11, and the stopper 21 is provided on the plate portion 20. In this structure, when the length of the battery module 2 inserted into the case body 11 is changed from L1 to L2, the plate portion 20 may be replaced by another plate portion 20 with a stopper 21 provided at a position changed depending on the change in the length of the battery module 2. Accordingly, it is possible to cope with the change in the length of the battery module without redesigning the case body 11. As the result, the case body 11 can be used commonly for various kinds of battery modules 2, so that manufacturing cost of the power supply device can be reduced.

Since the diameter size of the battery module of the backup power supply device for a data center is specified by the standard, it is necessary for increasing the battery capacity to increase the size of the battery module by increasing the size in only the depth direction. This may raise a problem that the change in the size of the battery module in the depth direction requires redesign of the battery case itself including the stopper. The problem can be solved by the stopper 21 on the plate portion 20 made of a member separable from the case body, so that the case body 11 can be used commonly.

The position of the stopper 21 may be determined depending on the module length of the battery module 2. As shown in FIG. 10, the stopper 21 is provided on the position at the distance L1 from the first surface 12 of the case body 11 depending on the module length L1 of the battery module 2. On the other hand, when the battery module 2' has a module length L2 as shown in FIG. 11, the stopper 21' is provided on the plate portion 20' at the distance L2 from the first surface 12. To allow the position of the stopper 21 to be adjusted depending on the module length of the battery module 2, the plate length D1 of the plate portion 20 in the depth direction, or in the longitudinal direction DL in which the battery module 2 is inserted, may be designed depending on the module lengths of the battery modules 2. Specifically, the plate length may be preferably designed to satisfy the condition expressed as D1 > Lmax - Lmin, where Lmax is a maximum value of the module lengths of the battery modules, and Lmin is a minimum value of the module lengths of the battery modules.

The plate portion 20 includes a plate-side board fixing portion 22 configured to fix a part of the circuit board 30. In this structure, in a case where the width of the circuit board 30' in the depth direction, or the board length, is changed depending on the change in the length of the battery module 2' inserted into the case body 11 as shown in FIG. 11, the position of the plate-side board fixing portion 22' provided on the plate portion 20' may be adjusted depending on the change in the board length of the circuit board 30'. Accordingly, it is possible to use circuit boards 30 having different board lengths from one another without redesigning the case body 11.

On the other hand, the case body 11 includes a case-side board fixing portion 36 configured to fix another part of the circuit board 30. The circuit board 30 is fixed to the case body 11 and the plate portion 20 with the case-side board fixing portion 36 and the plate-side board fixing portion 22, respectively. In the example shown in FIGS. 6 and 7, each of the case-side board fixing portion 36 and the plate-side board fixing portion 22 is configured by a cylindrical spacer having a threaded inner surface. However, the case-side board fixing portion 36 and the plate-side board fixing portion 22 may not be limited to such configurations, but may have any known structure configure to fix the circuit board.

The fixing position of the case-side board fixing portion 36 is fixed near the second surface 13 of the case body 11, the position of the plate-side board fixing portion 22 is determined depending on the board length of the circuit board 30. That is, since the board length may change depending on the module length as described above, the position of the plate-side board fixing portion 22 on the plate portion 20 may be adjusted as a solution to avoid redesigning of the case body 11 depending on the change in the board length of the circuit board 30. Specifically, in the example shown in FIG. 10, depending on the board length B1 of the circuit board 30, the position of the plate-side board fixing portion 22 provided on the plate portion 20 may be designed so that the plate-side board fixing portion 22 is provided on a position substantially at the distance B1 from the second surface 13. In the example shown in FIG. 11, depending on the board length B2 of the circuit board 30' shortened depending on the module length L2, the position where the plate-side board fixing portion 22 is provided on the plate portion 20' may be designed so that the plate-side board fixing portion 22' is provided on a position substantially at the distance of B2 from the second surface 13. In the above-described manner, it is possible to cope with the change in the board length by changing the design of the plate portion 20, so that the case body 11 can be used commonly.

The plate portion 20 is fixed to the case body 11 such that the end surface 120E of the plate portion 20 does not protrude from the bottom surface 3B of each storage space 3. In other words, when viewed in the longitudinal direction DL, the plate portion 20 does not protrude in the upward direction Du from the bottom surface 3B of the storage space 3. When viewed in the longitudinal direction DL, the end surface 120E of the plate portion 20 does not protrude and is not higher than the bottom surface 3B of each storage space 3. This configuration prevents the battery module 2 from being caught on the end surface 120E of the plate portion 20 to be obstructed from being inserted further when the battery module 2 is inserted into the power-supply case 10.

The plate portion 20 is fixed at a position extending linearly from the bottom surface 3B of each storage space 3. In other words, the plate portion 20 is formed such that an upper surface 120A of the plate portion 20 and the placement surface on which the battery module 2 is placed in the storage space 3 demarcated inside the case body 11 are flush with one another.

In the example shown, for example, in FIG. 7, a part of the bottom surface of the case body 11 opens as a bottom opening 24. The plate portion 20 closes the bottom opening 24. In this configuration, regardless of the addition of the plate portion 20 to the case body 11, the plate portion 20 added to the case body 11 does not cause a change in the height direction of the case body 11, so that the plate portion 20 may not interfere with the battery module 2 while being pushed into the case body.

### Modification Examples

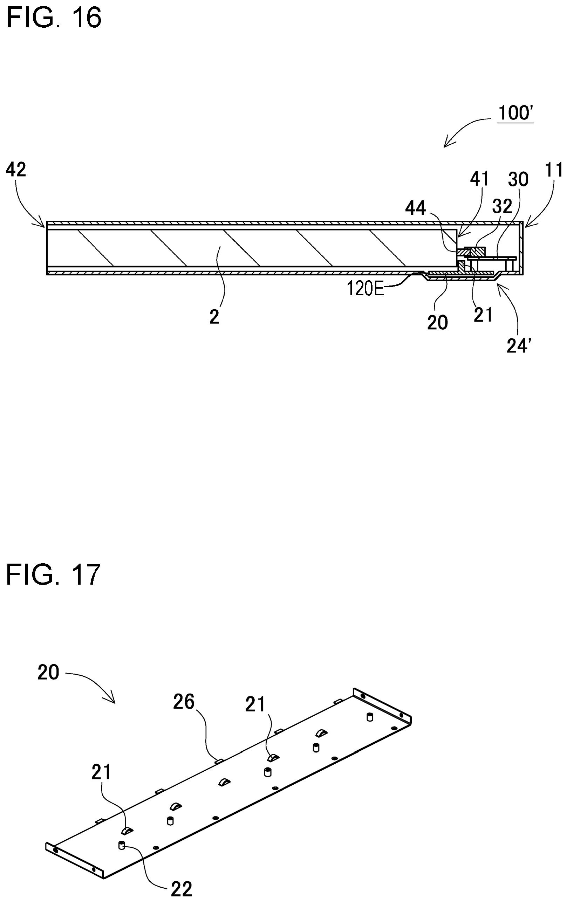

The above-described configuration in which the plate portion 20 is attached to the case body 11 and the upper surface 120A of the plate portion 20 is flush with the bottom surface 3B of the storage space 3 may not be limited to the configuration of the case body having the bottom opening 24. As an example, in a power supply device 100' according to a modification example shown in a schematic cross-sectional view of FIG. 16, a part of the bottom surface of the case body 11 is recessed to provide a recess 24' as a space in which the plate portion 20 is fixed. This configuration also allows the upper surface 120A of the plate portion 20 to be flush with the bottom surface 3B of the storage space 3 and avoids the situation that the end surface 120E of the plate portion 20 protrudes. This configuration is advantageous to the configuration of the opening provided in the case body 11 to enhance rigidness of the case body 11 by forming no openings and allowing the case body 11 to partially have a double-wall structure.

The case body 11 includes housing ports 14 aligned side by side in the first surface 12 as shown in, e.g., FIGS. 1 and 3. On the other hand, the plate portion 20 may extend, as shown in, e.g., FIGS. 5 to 7, in the direction crossing the storage spaces 3 to across storage spaces 3. This configuration restricts the push-in distances of the insertion surfaces 41, or the end surfaces, of the battery modules 2 with a single plate portion 20.

An engagement piece 26 which is partially engaged with the end edge of the case body 11 may be provided at an end of the plate portion 20, as shown in, e.g., in FIGS, 7 and 17. This configuration allows the upper surface 120A of the plate portion 20 to be flush with the bottom surface 3B of the storage space 3. The engagement piece 26 preferably has a small thickness to adjust the position of disposing the engagement piece 26 so that the engagement piece 26 may not disturb the inserting of the battery module 2.

### Stopper 21

The plate portion 20 includes stoppers 21. The plate portion 20' includes stoppers 21'. Each of the stoppers 21 and 21' interferes with a corresponding one of the battery modules 2 and 2' to restrict the push-in distance of the battery module when the corresponding one of the battery modules 2 and 2' is inserted from the housing port 14 into the case body 11 toward the second surface of the case body 11 as shown in, e.g., FIGS. 10 and 11. Therefore, the stoppers 21 and 21' are provided at positions corresponding to the respective storage spaces 3. In the example shown, for example, in FIG. 10, one stopper 21 is provided for each storage space 3. However, the configuration of the stoppers may not be limited to such example. For example, two or more stoppers may be provided for each storage space.

The stopper 21 may interfere with the insertion surface 41 of the battery module 2 and prevent the battery module 2 from being pushed more deeply than the position of the stopper 21. Accordingly, the shape of the stopper 21 may have an arbitrary shape as long as it can easily interfere with the inserted battery module. In the example shown in a perspective view of FIG. 17, the stopper 21 has an arch shape. The stopper 21 with an arch shape has a cross section with a semi-circular shape. The stopper 21 may be advantageous in that it can be easily formed by punching during the process of forming the plate portion 20 by a metal plate.

### Exemplary Embodiment 2

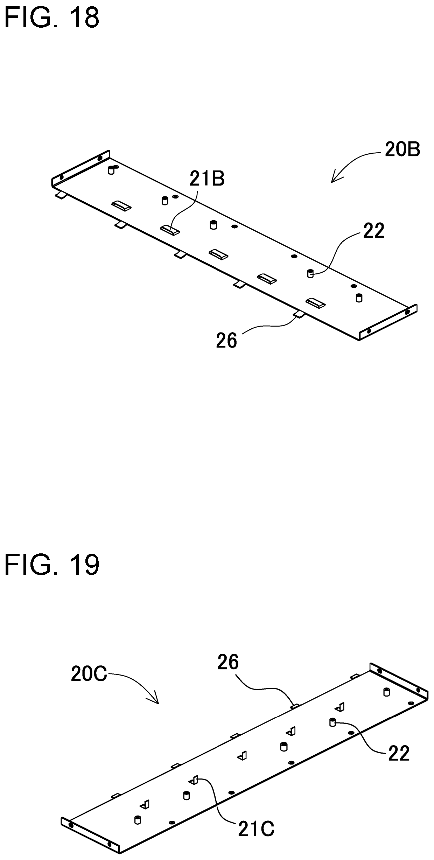

In a power supply device according to Exemplary Embodiment 2 shown in FIG. 18, the stopper 21B provided on the plate portion 20B has a hood shape opening at one side. The stopper 21B interferes with, or contacts, the end surface or the insertion surface 41 of the battery module 2 at the opening surface having the hood shape. The stopper 21B can also be easily formed by punching a metal plate similarly to described above. The stopper 21B shown in FIG. 8 is formed so that the surface with a hood shape opening is formed on the side facing the insertion surface 41 of the battery module 2. This is because the stopper 21B formed in the opposite direction cannot restrict the push-in distance of the battery module with the hood-shape sloping surface.

### Exemplary Embodiment 3

In a power supply device according to Exemplary Embodiment 3 shown in FIG. 19, a stopper 21C provided on a plate portion 20C is formed by cutting the plate portion 20 made of a metal to form a U-shape slit and pulling up the cut portion. This structure of stopper 21 can also be easily formed. The stopper 21C shown in FIG. 19 may preferably be formed so that the cut portion is on the side facing the battery module 2. Because, if the stopper 21C is formed in the opposite direction, the pulled-up stopper 21C would possibly be pushed down by the inserted battery module 2. Each stopper 21C may be in a form turned by 90 degrees in either the rightward or leftward direction from the state shown in FIG. 19. In this case, the end edge of the stopper 21C interferes with the insertion surface 41 of the battery module 2, so that the above-described concern that the stopper 21C would be bent to the downward direction by the insertion of the battery module can be avoided.

In the above, examples of the plate portions 20 each made of a metal plate have been described. The metal plate may be preferable, because the metal plate has high strength and can be easily processed. On the other hand, however, it is necessary to consider insulation from the circuit board 30 fixed on the upper surface 120A of the plate portion 20 as shown in, e.g., FIG. 7. Accordingly, an insulation care, such as addition of an insulating sheet 34, may be necessary.

### Method of Manufacturing Power Supply Device

A method of manufacturing the above-described power supply device will be described below. The power supply device 100 includes battery modules 2 and a power-supply case 10. Each of battery modules 2 includes secondary battery cells which are electrically connected to one another. The power-supply case 10 includes a case body 11 and a plate portion 20. The case body has a first surface 12 and a second surface 13 opposite to the first surface 12. The first surface 12 includes housing ports 14 opening therein so that the battery modules 2 are insertable into and removable from the case body 11 through the housing ports, respectively. The plate portion 20 is fixed to a part of the case body 11, and is configured by a member separable from the case body 11.

First, such a plate portion including a stopper 21 is prepared. The stopper 21 functions such that, when each of the battery modules 2 is inserted from the insertion surface 41, or an end surface thereof, through a corresponding housing port 14 into the case body 11 in a direction toward the second surface 13, the stopper 21 interferes with the insertion surface 41 of the battery module 2 to restrict the push-in distance by which the battery module 2 is inserted. Next, the plate portion 20 is fixed to a part of the case body 11. Since the plate portion 20 including the stopper 21 is made of a member separable from the case body 11, even in the case that the length of the battery module 2 is changed, it is possible to cope with the change by replacing only the plate portion 20 with one having a stopper 21 provided at a position changed depending on the change in the length of the battery module 2. Accordingly, the necessity of redesigning the case body 11 can be avoided.

In preparing the plate portion 20, a plate length D1 of the plate portion 20 in the depth direction may be determined to satisfy a condition expressed as D1 > Lmax - Lmin, where Lmax is a maximum value of module lengths of the battery modules 2, and Lmin is a minimum value of the module lengths of the battery modules 2. In this condition, it is possible to change the position at which the stopper 21 is provided within the range of the plate length of the plate portion 20, so that the plate portion 20 can be used commonly for all ranges of the expected module lengths of the battery modules 2.

### INDUSTRIAL APPLICABILITY

A power supply device, a power-supply case for the power supply device, and a method of manufacturing the power supply device according to the present disclosure may be favorably applicable to stationary power storage devices such, for example, as home-use, industry-use or factory-use power supply devices, or backup power supply devices for the data centers.

### REFERENCE MARKS IN THE DRAWINGS

- 100, 100': power supply device
- 1: secondary battery cell
- 2: battery module
- 3: storage space
- 10: power-supply case
- 11: case body
- 12: first surface
- 13: second surface
- 14: housing port
- 15: first body case
- 16: second body case
- 17: third body case
- 18: fourth body case
- 19: partition plate
- 20, 20', 20B, 20C: plate portion
- 21, 21', 21B, 21C: stopper
- 22, 22': plate-side board fixing portion
- 24: bottom opening
- 24': recess
- 26: engagement piece
- 30, 30': circuit board
- 32: case-side connector
- 34: insulating sheet
- 36: case-side board fixing portion
- 41: insertion surface
- 42: exposure surface
- 43: module enclosure
- 43A: first module case
- 43B: second module case
- 44: battery-side connector
- 45: internal assembly
- 46: lead plate
- 600: power supply device
- 602: battery module
- 610: power-supply case
- 630: electrical component
- 721: stopper
- 800: power supply device
- 802: battery module
- 810: power-supply case
- 821: stopper
- 832: case-side connector
- 844: battery-side connector
- 900: power supply device
- 902: battery module
- 910: power-supply case
- 921: stopper
- 930: circuit board
- L1, L2: module length
- B1, B2: board length
- D1: plate length

## Claims

1. A power supply device comprising:
a plurality of battery modules, each of the plurality of battery modules including a plurality of secondary battery cells; and
a power-supply case accommodating the plurality of battery modules therein, wherein
the power-supply case includes:
a case body having a first surface and a second surface opposite to the first surface, the first surface including a plurality of housing ports opening therein, each of the plurality of battery modules being accommodated removably in a corresponding one of the plurality of housing ports through the corresponding one of the plurality of housing ports; and
a plate portion fixed to a part of the case body, the plate portion being made of a member separable from the case body, and
the plate portion includes a stopper restricting an insertion distance by which the each of the plurality of battery modules is inserted into the corresponding one of the plurality of housing ports by interfering with an end surface of the each of the plurality of battery modules while the end surface of the each of the plurality of battery modules is inserted into the corresponding one of the plurality of housing ports toward the second surface of the case body.

2. The power supply device according to claim 1, wherein
the case body includes a plurality of storage spaces therein communicating with the plurality of housing ports, respectively, the each of the plurality of battery modules being accommodated in a corresponding one of the plurality of storage spaces, and
an end surface of the plate portion does not protrude from a bottom surface of each of the plurality of storage spaces.

3. The power supply device according to claim 1, wherein a placing surface inside the case body on which the plurality of battery modules are placed is flush with an upper surface of the plate portion.

4. The power supply device according to claim 1, wherein
the case body has a bottom opening provided in a bottom surface of the case body, and
the plate portion closes the bottom opening of the case body.

5. The power supply device according to claim 1, further comprising
a circuit board disposed inside the case body between the second surface of the case body and the end surface of the each of the plurality of battery modules, wherein
the plate portion further includes a plate-side board fixing portion fixing a part of the circuit board.

6. The power supply device according to claim 5, wherein the case body includes a case-side board fixing portion fixing another part of the circuit board.

7. The power supply device according to claim 5, wherein the circuit board is placed in the case body along an insertion direction of the plurality of battery modules.

8. The power supply device according to any one of claims 1 to 7, wherein the plurality of housing ports are aligned in a horizontal direction in the first surface.

9. The power supply device according to any one of claims 1 to 7, wherein the stopper has a cross section with a semi-circular shape.

10. The power supply device according to any one of claims 1 to 7, wherein the power supply device is a back-up power supply for a data center.

11. A power-supply case for a power supply device, the power-supply case being configured to accommodate a plurality of battery modules therein, each of the plurality of battery modules including a plurality of secondary battery cells, the power-supply case comprising:
a case body having a first surface and a second surface opposite to the first surface, the first surface including a plurality of housing ports opening therein, each of the plurality of battery modules being configured to be accommodated removably in a corresponding one of the plurality of housing ports through the corresponding one of the plurality of housing ports; and
a plate portion fixed to a part of the case body, the plate portion being made of a member separable from the case body, wherein
the plate portion includes a stopper configured to restrict an insertion distance by which the each of the plurality of battery modules is inserted into the corresponding one of the plurality of housing ports by interfering with an end surface of the each of the plurality of battery modules while the end surface of the each of the plurality of battery modules is inserted into the corresponding one of the plurality of housing ports toward the second surface of the case body.

12. A method of manufacturing a power supply device which includes:
a plurality of battery modules, each of the plurality of battery modules including a plurality of secondary battery cells; and
a power-supply case accommodating the plurality of battery modules therein, wherein the power-supply case includes:
a case body having a first surface and a second surface opposite to the first surface, the first surface including a plurality of housing ports opening therein, each of the plurality of battery modules being accommodated removably in a corresponding one of the plurality of housing ports through the corresponding one of the plurality of housing ports; and
a plate portion fixed to a part of the case body, the plate portion being made of a member separable from the case body, the method comprising:
providing the plate portion including a stopper restricting an insertion distance by which the each of the plurality of battery modules is inserted into the corresponding one of the plurality of housing ports by interfering with an end surface of the each of the plurality of battery modules while the end surface of the each of the plurality of battery modules is inserted into the corresponding one of the plurality of housing ports toward the second surface of the case body; and
fixing the plate portion to a part of the case body.

13. The method according to claim 12, wherein said preparing the plate portion comprises determining a plate length D1 of the plate portion in a depth direction of the plate portion to satisfy a condition, $D 1 > Lmax - Lmin ,$ where Lmax is a maximum value of module lengths of the plurality of battery modules, and Lmin is a minimum value of the module lengths of the plurality of battery modules.
